# EUROPEAN PATENT APPLICATION

(11) **EP 4 216 052 A1**
(43) Date of publication of application: **26.07.2023**
(21) Application number: 21881895.3
(22) Date of filing: 12.10.2021
(51) Int. Cl.: G06F 8/38

(54) **METHOD FOR DEVELOPING MVVM ARCHITECTURE-BASED APPLICATION, AND TERMINAL**

(30) Priority: 22.10.2020 CN 202011141087; 05.02.2021 CN 202110163963
(71) Applicant: Huawei Technologies Co., Ltd., Shenzhen, Guangdong 518129 (CN)
(72) Inventor: YUAN, Zihui, Shenzhen, Guangdong 518129 (CN); XIONG, Shiyi, Shenzhen, Guangdong 518129 (CN); LI, Yang, Shenzhen, Guangdong 518129 (CN); CHEN, Xiaoxiao, Shenzhen, Guangdong 518129 (CN)
(74) Representative: Gill Jennings & Every LLP
(86) International application number: PCT/CN2021/123319
(87) International publication number: WO 2022/083477

(57) **Abstract**

An MWM architecture-based application development method and a terminal are disclosed, relate to the terminal field, and can support a developer in developing an MWM architecture-based application by using a plurality of interface description languages, thereby reducing development costs. The method includes: The developer customizes data objects of some background data, and declares, in an interface description file, a binding relationship between some controls in a UI and the data objects of the background data. The interface description file may use any interface description language. Then, in a process of parsing the interface description file designed by the developer, the declared binding relationship is automatically identified. The binding relationship is registered. Corresponding listening is set, to establish a bidirectional binding channel.

## Description

This application claims priority to Chinese Patent Application No. 202011141087.6, filed with the China National Intellectual Property Administration on October 22, 2020 and entitled "UI LANGUAGE ADAPTATION METHOD AND TERMINAL", and claims priority to Chinese Patent Application No. 202110163963.3, filed with the China National Intellectual Property Administration on February 5, 2021 and entitled "MVVM ARCHITECTURE-BASED APPLICATION DEVELOPMENT METHOD AND TERMINAL", which are incorporated herein by reference in their entireties.

### TECHNICAL FIELD

This application relates to the field of terminals, and in particular, to an MWM architecture-based application development method and a terminal.

### BACKGROUND

A model-view-viewmodel (Model-View-ViewModel, MWM) architecture is a software architecture pattern. The MWM architecture separates development of a graphical user interface (graphical user interface, GUI) from development of service logic or back-end logic (data model).

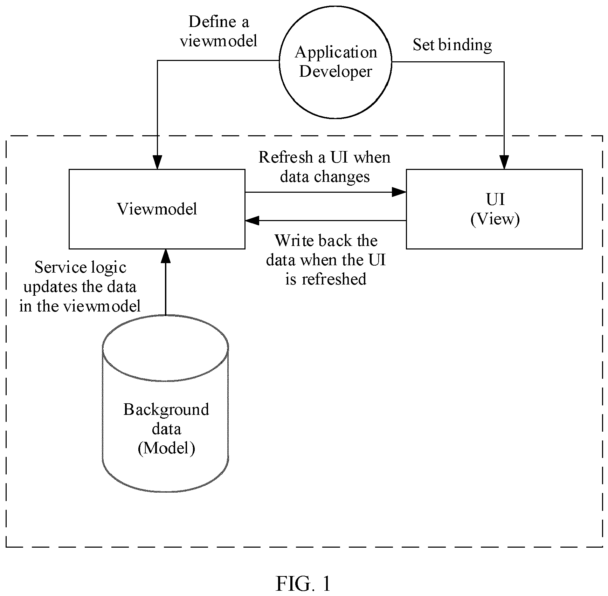

As shown in FIG. 1, an MWM architecture-based application is abstracted into a model (model, that is, background data), a view (view, that is, a UI), and a viewmodel. An application developer can define the viewmodel and use the viewmodel to bind each control in the UI to a data object in the background data. In this way, when the UI changes, the background data is automatically updated accordingly. When the background data changes due to reasons such as a service logic update, the UI is automatically updated accordingly. In processes of automatically updating the data and the UI, a user does not need to write complex and repeated program code. This reduces development costs of the application developer.

Currently, the MWM architecture is implemented based on a DataBinding tool library of Google^{®}. An application developer uses an Android studio (an Android^{®} integrated development tool) integrated with the DataBinding tool library to develop an interface description file and the like of an application, declares a package name of background data in the interface description file, and declares a data object to be bound in a specified UI element. Then, the Android APT (a tool for processing an annotation) may be used to precompile the interface description file to generate several files with binding logic, for example, an auxiliary extensible markup language (extensible markup language, xml) file, a Java file for binding settings, a BR class file, and a Mapper file, to bind a UI to the background data, thereby completing development of an MWM architecture-based application.

In this solution, the development of the MWM architecture-based application depends on the Android studio development tool of Google^{®} and an Android APT precompilation mechanism. In addition, the technical solution is bound to an xml language, and cannot provide development of the MWM architecture for another interface description language. Therefore, another technical solution that does not depend on the xml language and supports development of the MWM architecture-based application is urgently needed.

### SUMMARY

According to an MWM architecture-based application development method and a terminal provided in this application, a developer can be supported in developing an MWM architecture-based application by using a plurality of interface description languages. This reduces development costs.

To achieve the foregoing objectives, embodiments of this application provide the following technical solutions.

According to a first aspect, an MWM architecture-based application development method is provided, applied to an application development device. The method includes: receiving a viewmodel object in background data that is in a first application and that is defined by a user, and a UI description file that is of the first application and that is defined by the user; parsing the UI description file, and identifying a binding relationship, in the UI description file, between a first UI control and the viewmodel object; setting listening for the first UI control, to update the viewmodel object; setting an instance of the viewmodel object, and setting listening for the instance, to update the first UI control; and updating the first UI of the first application when listening to that the first UI control changes or listening to that the instance changes.

In other words, a developer may customize data objects of some background data through an interface provided by a development tool that is of the MWM architecture and that is provided in this embodiment of this application. The developer declares, in the interface description file, a binding relationship between some controls in the UI and data objects of background data. Then, in a process of parsing the interface description file designed by the developer, the declared binding relationship is automatically identified. The binding relationship is registered in the development tool of the MWM architecture provided in this embodiment of this application, and corresponding listening is set, to establish a refresh channel. In this way, during UI development, when listening to that a control in the UI changes, the developer automatically updates a data object bound to the control. When listening to that a data object in the background data changes, the automatically updates a control bound to the data object. Therefore, application development based on the MWM architecture is implemented. This helps the developer focus on UI design and orchestration, simplifies a UI development process, and reduces application development costs.

It may be noted that, in a process of parsing the UI description file, a development tool of the MWM architecture provided in this application automatically identifies a binding relationship between the UI control and the ViewModel, and sets bidirectional listening between the UI control and the viewmodel object, to implement bidirectional binding. It can be learned that the development method provided in this application no longer depends on an Android studio development tool of Google^{®} and an Android APT precompilation mechanism, so that application development of the MWM architecture can be decoupled from an xml language. In other words, an interface description language used by the developer is not limited in the development method provided in this embodiment of this application.

In a possible implementation, the UI description file of the first application supports at least two interface description languages. The at least two interface description languages include any two of an extensible markup language xml, a domain-specific language DSL, or an embedded domain-specific language EDSL. It can be learned that the method provided in this embodiment of this application can support application development based on the MWM architecture in a plurality of interface description languages. This helps the developer focus on UI design and orchestration, is not limited to developing a UI file by using a specific interface description language, and reduces application development costs.

In a possible implementation, the viewmodel object includes one or more members, and the first UI control includes one or more elements. The binding relationship between the first UI control and the viewmodel object includes: There is a correspondence between a first element in the first UI control and a first member in the viewmodel object.

In a possible implementation, the updating the first UI of the first application when listening to that the first UI control changes or listening to that the instance changes is specifically: automatically updating content of the first element in the first UI when listening to that the user modifies content of the first member in the viewmodel object; and automatically updating the content of the first member in the viewmodel object when listening to that the user modifies the content of the first element in the first UI.

In a possible implementation, the development device stores a registry. The registry records a correspondence between an identifier of the first element of the first UI control and an identifier of the first member in the viewmodel object.

In a possible implementation, the development device includes a parsing engine, configured to parse the UI description file. The parsing engine includes a syntactic logic definition of the binding relationship between the first UI control and the viewmodel object.

In other words, in a parsing engine corresponding to each interface description language, syntax logic for defining the binding relationship between the UI control and the viewmodel object when the UI file is developed by using the interface description language needs to be defined. In this way, when parsing the UI file, the parsing engine may parse out, based on the defined syntax logic, the binding relationship defined by the developer.

According to a second aspect, an MWM architecture-based application development device is provided. The development device includes a processor, a display screen, and a memory. The display screen is coupled to the processor. The memory is configured to store computer program code. The computer program code includes computer instructions. When the processor reads the computer instructions from the memory, the development device performs the following operations: receiving a viewmodel object in background data that is in a first application and that is defined by a user, and a UI description file that is of the first application and that is defined by the user; parsing the UI description file, and identifying a binding relationship, in the UI description file, between a first UI control and the viewmodel object; setting listening for the first UI control, to update the viewmodel object; setting an instance of the viewmodel object, and setting listening for the instance, to update the first UI control; and updating the first UI of the first application when listening to that the first UI control changes or listening to that the instance changes.

In a possible implementation, the UI description file of the first application supports at least two interface description languages. The at least two interface description languages include any two of an extensible markup language xml, a domain-specific language DSL, or an embedded domain-specific language EDSL.

In a possible implementation, the viewmodel object includes one or more members, and the first UI control includes one or more elements. The binding relationship between the first UI control and the viewmodel object includes: There is a correspondence between a first element in the first UI control and a first member in the viewmodel object.

In a possible implementation, the updating the first UI of the first application when listening to that the first UI control changes or listening to that the instance changes is specifically: automatically updating content of the first element in the first UI when listening to that the user modifies content of the first member in the viewmodel object; and automatically updating the content of the first member in the viewmodel object when listening to that the user modifies the content of the first element in the first UI.

In a possible implementation, the development device stores a registry. The registry records a correspondence between an identifier of the first element of the first UI control and an identifier of the first member in the viewmodel object.

In a possible implementation, the development device includes a parsing engine, configured to parse the UI description file. The parsing engine includes a syntactic logic definition of the binding relationship between the first UI control and the viewmodel object.

According to a third aspect, an apparatus is provided. The apparatus is included in a development device. The apparatus has a function of implementing behavior of the development device in any method in the foregoing aspects and possible implementations. The function may be implemented by hardware, or may be implemented by hardware executing corresponding software. The hardware or the software includes at least one module or unit corresponding to the foregoing function, for example, a communication module or unit, and a processing module or unit.

According to a fourth aspect, a computer-readable storage medium is provided, including computer instructions. When the computer instructions are run on a development device, the development device is enabled to perform the method in any one of the first aspect or the possible implementations of the first aspect.

According to a fifth aspect, a computer program product is provided. When the computer program product runs on a computer, the computer is enabled to perform the method in any one of the first aspect or the possible implementations of the first aspect.

According to a sixth aspect, a chip system is provided, including a processor. When the processor executes instructions, the processor performs the method in any one of the first aspect or the possible implementations of the first aspect.

It may be understood that for beneficial effects that can be achieved by the development device according to the second aspect, the apparatus according to the third aspect, the computer storage medium according to the fourth aspect, the computer program product according to the fifth aspect, and the chip system according to the sixth aspect, refer to beneficial effects in any one of the first aspect and possible designs of the first aspect. Details are not described herein again.

### BRIEF DESCRIPTION OF DRAWINGS

FIG. 1 is a schematic diagram of a structure of an MWM architecture;
FIG. 2 is a schematic diagram of a structure of a development device according to an embodiment of this application;
FIG. 3 is a schematic diagram of a structure of an MWM architecture-based application development tool according to an embodiment of this application;
FIG. 4A and FIG. 4B are a schematic flowchart of an MWM architecture-based application development method according to an embodiment of this application;
FIG. 5 is a schematic diagram of an adaptation method of a parsing engine of an interface description language according to an embodiment of this application;
FIG. 6 is a schematic diagram of a method for registering a binding relationship between a UI and background data according to an embodiment of this application;
FIG. 7 is a schematic diagram of a viewmodel object instantiation method according to an embodiment of this application;
FIG. 8 is a schematic diagram of a method for binding an instance of a viewmodel object to a control in a UI according to an embodiment of this application;
FIG. 9 is a schematic diagram of interfaces of some applications according to an embodiment of this application; and
FIG. 10 is a schematic diagram of a structure of a chip system according to an embodiment of this application.

### DESCRIPTION OF EMBODIMENTS

In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of the embodiments of this application, unless otherwise specified, "a plurality of" means two or more.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner.

An embodiment of this application provides an MWM architecture-based application development method. A language used by a developer to develop an interface description file may not be limited. In other words, the development method of the MWM architecture provided in this embodiment of this application can support the developer in developing an application with the MWM architecture by using various interface description languages. In addition, the development method of the MWM architecture provided in this embodiment of this application may not depend on an Android APT precompilation mechanism of Google^{®}, but dynamically set a binding relationship between a UI and background data in a process of parsing the interface description file, to implement the MWM architecture.

The developer uses an integrated development environment (Integrated Development Environment, IDE) tool on a development device to develop an application. The IDE tool is a software development service set that integrates a code writing function, an analysis function, a compilation function, a debugging function, and the like. For example, a typical IDE tool of an Android system includes Android studio and DevEco studio.

In some examples, embodiments of this application provide a development tool (which may also be referred to as a data binding tool) of the MWM architecture, for example, may be integrated into the IDE tool in a form of a library. Alternatively, the developer imports a development tool of the MWM architecture provided in this embodiment of this application into the IDE tool by adding a dependency library.

During application development, an important task is to develop a UI of an application. UI development includes UI description and UI behavior definition. The interface description refers to describe a UI layout (layout), a used control, and visual styles of the layout and the control by using a UI description language. The interface behavior definition refers to defining a dynamic change or a response of an interface, for example, a response to a UI operation of the user.

In this application, the developer may develop a UI of an application by using, for example, an extensible markup language (extensible markup language, xml), a domain-specific language (domain-specific language, DSL), or an embedded domain-specific language (embedded domain specific language, EDSL), to form an interface description file. In addition, the developer may customize data objects of some background data through an interface provided by the development tool that is of the MWM architecture and that is provided in this embodiment of this application. The developer declares, in the interface description file, a binding relationship between some controls in the UI and data objects of background data. Then, in a process of parsing the interface description file designed by the developer, the declared binding relationship is automatically identified. The binding relationship is registered in the development tool of the MWM architecture provided in this embodiment of this application, and corresponding listening is set, to establish a refresh channel. In this way, during UI development, when listening to that a control in the UI changes, the developer automatically updates a data object bound to the control. When listening to that a data object in the background data changes, the automatically updates a control bound to the data object. Therefore, application development based on the MWM architecture is implemented. This helps the developer focus on UI design and orchestration, simplifies a UI development process, and reduces application development costs.

For example, the development device in this embodiment of this application may be, for example, a mobile phone, a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, an in-vehicle device, or a smart screen. A specific form of the development device is not specially limited in this application.

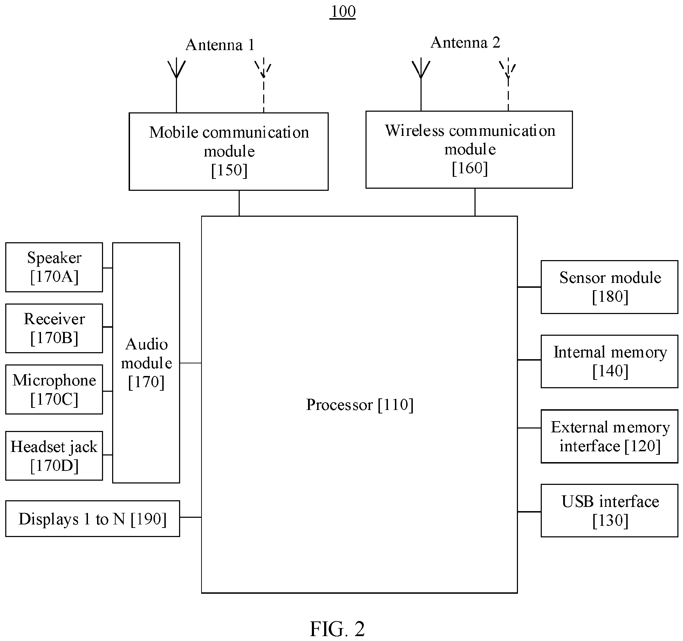

FIG. 2 is a schematic diagram of a structure of a development device 100. The development device 100 may include a processor 110, an external memory interface 120, an internal memory 121, a universal serial bus (universal serial bus, USB) interface 130, an internal memory 140, an antenna 1, an antenna 2, a mobile communication module 150, a wireless communication module 160, an audio module 170, a loudspeaker 170A, a receiver 170B, a microphone 170C, a headset interface 170D, a sensor module 180, a display screen 190, and the like.

It may be understood that the structure shown in this embodiment of this application does not constitute a specific limitation on the development device 100. In some other embodiments of this application, the development device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a graphics processing unit (graphics processing unit, GPU), a controller, a baseband processor, and the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

It may be understood that an interface connection relationship between the modules that is shown in this embodiment of the present disclosure is merely an example for description, and does not constitute a limitation on a structure of the development device 100. In some other embodiments of this application, the development device 100 may alternatively use an interface connection manner different from that in the foregoing embodiment, or use a combination of a plurality of interface connection manners.

A wireless communication function of the development device 100 may be implemented through the antenna 1, the antenna 2, the mobile communication module 150, the wireless communication module 160, the modem processor, the baseband processor, and the like. The mobile communication module 150 can provide a solution, applied to the development device 100, to wireless communication including 2G, 3G, 4G, 5G, and the like. The wireless communication module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the development device 100. The wireless communication module 160 may be one or more components integrating at least one communication processing module.

The development device 100 implements a display function through the GPU, the display 190, the application processor, and the like. The GPU is a microprocessor for image processing, and is connected to the display 190 and the application processor. The GPU is configured to perform mathematical and geometric computation, and render an image. The processor 110 may include one or more GPUs, which execute program instructions to generate or change display information.

The display 190 is configured to display an image, a video, and the like. The display 190 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile device 100 may include one or N displays 190. Herein, N is a positive integer greater than 1.

The external memory interface 120 may be used to connect to an external storage card, for example, a micro SD card, to extend a storage capability of the development device 100. The external memory card communicates with the processor 110 through the external memory interface 120, to implement a data storage function. For example, files such as music and videos are stored in the external storage card.

The USB interface 130 is an interface that conforms to a USB standard specification, and may be specifically a mini USB interface, a micro USB interface, a USB type-C interface, or the like. The USB interface 130 may be configured to connect to a charger to charge the development device 100, or may be configured to transmit data between the development device 100 and a peripheral device, or may be configured to connect to a headset for playing audio through the headset.

The internal memory 140 may be configured to store computer-executable program code. The executable program code includes instructions. The internal memory 140 may include a program storage area and a data storage area. The program storage area may store an operating system, an application required by at least one function (for example, a voice playing function or an image playing function), and the like. The data storage area may store data (such as audio data and an address book) created during use of the development device 100, and the like. In addition, the internal memory 140 may include a high-speed random access memory, or may include a nonvolatile memory, for example, at least one magnetic disk storage device, a flash memory, or a universal flash storage (universal flash storage, UFS). The processor 110 runs instructions stored in the internal memory 140 and/or instructions stored in the memory disposed in the processor, to perform various function applications and data processing of the development device 100.

The development device 100 may implement an audio function, for example, music playing and recording, through the audio module 170, the speaker 170A, the receiver 170B, the microphone 170C, the headset jack 170D, the application processor, and the like.

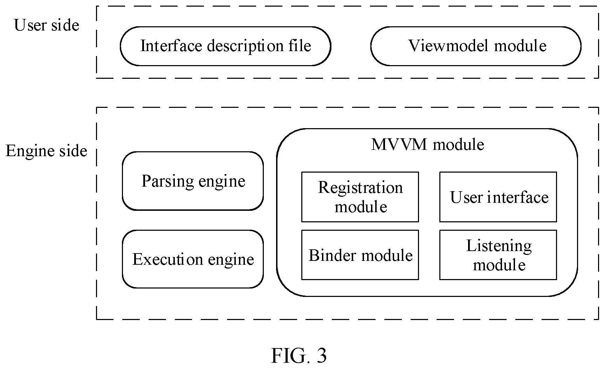

FIG. 3 is a schematic diagram of a software structure of an application development tool according to an embodiment of this application. The application development tool may use the software of a layered architecture, including a UI layer, an MWM module layer, and a data layer. The MWM module layer is configured to establish a binding channel between the UI layer and the data layer.

In a specific embodiment, the UI layer includes an interface description file, a parsing engine, and an execution engine. The data layer includes a viewmodel module. The MWM module layer includes a registration module, a binder (Binder) module, a listening module, and a user interface. The registration module is configured to record and maintain a binding relationship between the UI layer and the data layer, for example, a bidirectional binding relationship between a control at the UI layer and a data object at the data layer. The binder module is configured to store information such as a reference and an attribute of the control and a reference and an attribute of the bound data object at the UI layer, set listening, and the like. The listening module is configured to establish a refresh channel between the UI layer and the data layer. The user interface is used to perform general processing on different types of data, so that data can be exchanged between the MWM module layer and the data layer. The following describes specific functions of each module in detail with reference to a specific process.

For ease of understanding the following, a structure of the interface description file is first briefly described herein.

For example, the interface description file is developed by using a DSL language. To be specific, the interface description file uses a json format. The interface description file may include the following structure:

```
          {
            "meta-data":{},
            "import":{},
            "model":{},
            "layout-data-common": {},
            "layout-data-uimode": { },
            "styles":{
          }
```

}The meta-data includes information such as a version number. The following is an example:

```
          "meta-data": {
                "version": "10.0.1008"
          }
```

The version indicates a version number of the interface description file. For example, a format of the version is x. y. z, where x indicates a product, y indicates a subsystem of the product, and z indicates a quantity of development times. A version of the interface description file needs to match a version of a customized UI engine. For example, the version of the customized UI engine needs to be the same as or later than that of the interface description file, so that the interface description file can be successfully parsed.

The import is used to import an object type, and the model is used to declare an object. The following is an example:

```
          "import": {
              "UserInfo": "com.myapp.UserInfo",
              "Context": "com.myapp.TestActivity"
          },
          "model": {
              "user": "UserInfo",
              "context": "Context"
          },
```

The import herein refers to importing a complete path com.myapp.UserInfo for storing UserInfo and a complete path com.myapp.TestActivity for storing Context. An object user of a UserInfo type and an object context of the Context type are declared in the model. In this way, the user and context can be directly invoked in the interface description file (layout-data-common and layout-data-uimode). In this application, files such as UserInfo and TestActivity are referred to as resource files. The resource file includes a resource used to generate a UI of the application, and the resource may include a data structure, a control, a control attribute, and the like that are defined by a developer.

Layout-data-common is used to describe a common UI. All types of electronic devices parse content in the layout-data-common, and layout the common UI based on the content in the layout-data-common. Layout-data-uimode is used to describe a UI of a specified device. In an implementation, a difference between the UI of the specified device and the common UI is declared in layout-data-uimode. In another implementation, all conditions applicable to the UI of the specified device are declared in the layout-data-uimode. The specified device may be a mobile phone, a watch, a head unit, a smart home device (for example, a smart television, a smart screen, or a smart speaker), a large screen, a laptop, a desktop computer, or the like. For example, a specific form of the layout-data-uimode may include layout-data-phone (used for a mobile phone), layout-data-watch (used for a watch), layout-data-television (used for a television), and the like.

The "styles" is used to define a customized parameter and support customized style orchestration. For example, the developer defines myTextStyle in the style and can invoke the customized parameter in a $style.myTextStyle mode in the layout-data-common.

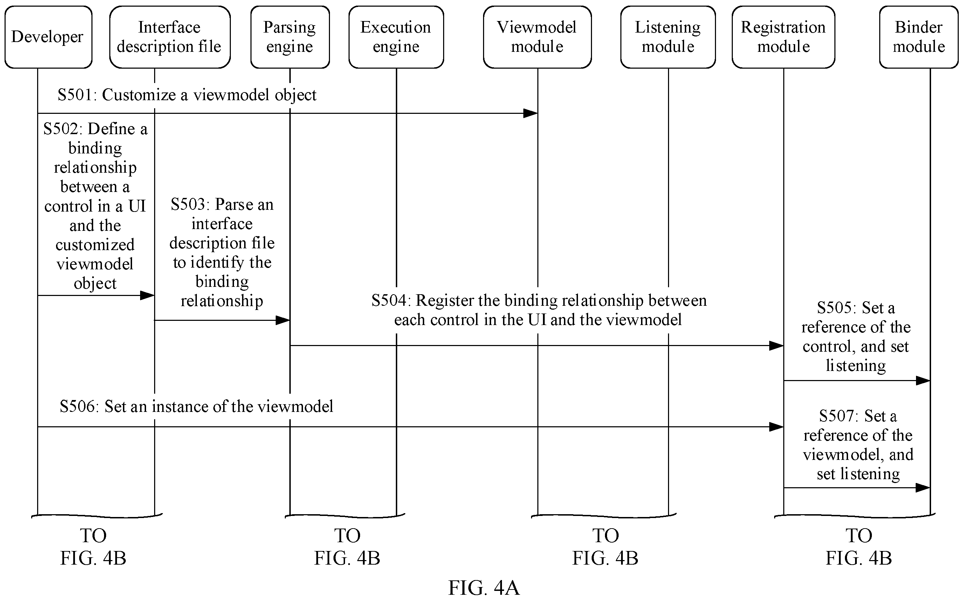

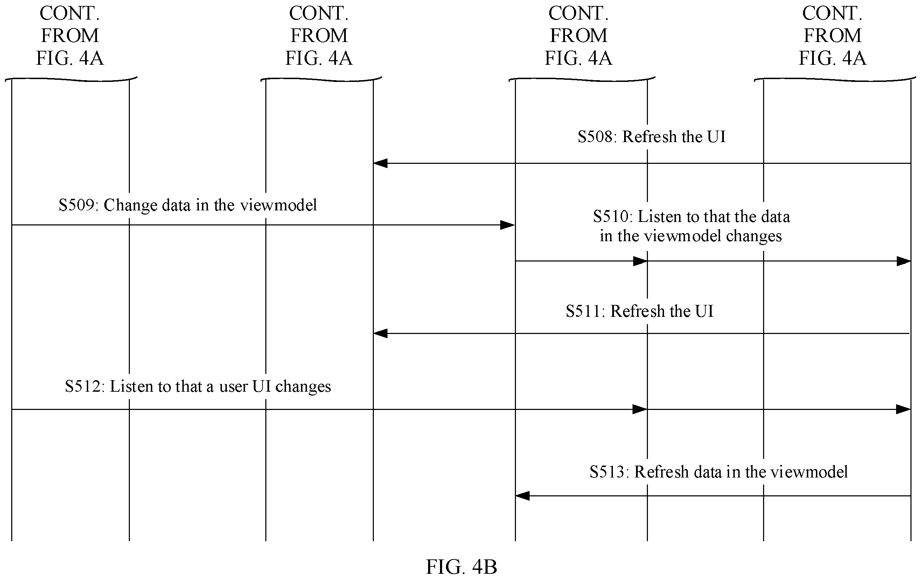

FIG. 4A and FIG. 4B are a schematic flowchart of an MWM architecture-based application development method according to this application. The following provides detailed descriptions with reference to the accompanying drawings.

S501: A developer customizes a viewmodel object.

When developing an application, the developer uses an IDE tool (such as the Android studio, the DevEco studio, or another tool) on a developer device to develop an interface description file of the application. The IDE tool integrates a library (that is, an MWM module in FIG. 3) of the MWM architecture provided in embodiments of this application. Alternatively, the developer may manually add the library (that is, the MWM module in FIG. 3) of the MWM architecture provided in embodiments of this application as a library on which application development depends.

Interface development of the application includes interface description and interface behavior definition. The interface description refers to describing a UI layout, a used control, and visual styles of the layout and the control by using an interface description language. In this embodiment of this application, the developer may use any interface description language, for example, an xml language or a DSL language. The interface description language is not limited in this embodiment of this application. The interface behavior definition refers to defining a dynamic change or a response of an interface, for example, a response to a UI operation of a user. In this embodiment of this application, the interface behavior definition may be developed by using a Java programming language.

In an implementation, the developer may customize, in a viewmodel module through a user interface provided by the MWM module, a viewmodel type that needs to be used by the application, and import a file path of the customized viewmodel type into Java code. A data object of the viewmodel type that needs to be used is further customized in the interface description file (for example, a JSON file), and is briefly referred to as the viewmodel object.

The development method provided in this embodiment of this application is described by using an example in which an interface of a weather application is developed by using the DSL language.

For example, the developer may import (import) a file path of a viewmodel type defined by the user to Java code to store the file path. Details are as follows:
import com.huawei.uikit.dsl.allnewdsl.viewmodel.WeatherViewModel.

Further, the developer declares a required viewmodel object in a model block of an interface description file (for example, a JSON file), for example:

```
          {
            "model": {
              "weather": "com.huawei.uikit.dsl.allnewdsl.viewmodel.WeatherViewModel"
          }.
```

It can be learned that the developer defines a viewmodel object-"weather", of a weatherviewmodel type, and a complete stored path of the weatherviewmodel type is "com.huawei.uikit.dsl.allnewdsl.viewmodel.WeatherViewModel".

S502: The developer declares, in the interface description file, a binding relationship between a control in a UI and the customized viewmodel object.

The JSON file is still used as an example. The developer may use a ComponentName():{} manner to describe a control. In an implementation, an attribute and an attribute value of the control can be input into { } in a format of "attribute 1: attribute value 1, attribute 2: attribute value 2". The following provides an example of declaring a weather control in the UI:

```
          "WeatherHomeView(id:home)": {
                       "city": "$weather.city",
                       "currentTemperature": "$weather.currentTemperature",
                       "highTemperature": "$weather.highTemperature",
                       "lowTemperature": "$weather.lowTemperature",
                       "weather": "$weather.weather",
                       "pollution": "$weather.pollution"
          },
```

It can be learned that the user declares, in the interface description file, a binding relationship between a control WeatherHomeView and the viewmodel object-weather, including a binding relationship between each element in the control WeatherHomeView and each member in the viewmodel object. For example, "city": "$weather.city": declares that a city element in the WeatherHomeView directly accesses a variable value of city in weather. In other words, a binding relationship is established between the city element in the WeatherHomeView and a city member in the ViewModel object-weather. For another example, "currentTemperature": "$weather.currentTemperature": declares that a currentTemperature element in the WeatherHomeView directly accesses a variable value of currentTemperature in weather. In other words, a binding relationship is established between the currentTemperature element in the WeatherHomeView and a currentTemperature member in the viewmodel object-weather.

In this way, the developer completes development of the UI of the application, and obtains a complete interface description file.

S503: Parse the interface description file designed by the developer, and identify the binding relationship that is between the control in the UI and the viewmodel and that is declared in the interface description file.

For example, a parsing engine converts content in the interface description file into a data format that matches an execution engine, so that the execution engine draws a corresponding UI. In some examples, the parsing engine may further perform syntax check on the content in the interface description file. If syntax of the interface description file is verified successfully, the interface description file is parsed. If syntax of the interface description file fails to be verified, the interface description file is not parsed.

In a specific embodiment, the parsing engine parses data in fields such as a declaration (model) field, a style (style) field, and a layout (layout-data-common and layout-data-uimode) field in the interface description file, and stores the data in a database after preprocessing. An electronic device specifically parses data in the layout (layout) field by using a control parser in the parsing engine, and recursively invokes, based on a logical structure described in the layout field, the execution engine to instantiate the control, to form a control tree of the UI. Then, an attribute parser in the parsing engine is used to parse an attribute field of each control, and the execution engine is invoked to set an attribute for each control to complete UI drawing. The execution engine is configured to construct controls (an instantiated control and attribute setting) of the UI based on data parsed by the parsing engine, perform layout orchestration on the control, and generate an interface declared in the interface description file. The execution engine may further implement mapping between a component event and a user behavior, and execute, in response to a user behavior, an action corresponding to the user behavior defined in the interface description file.

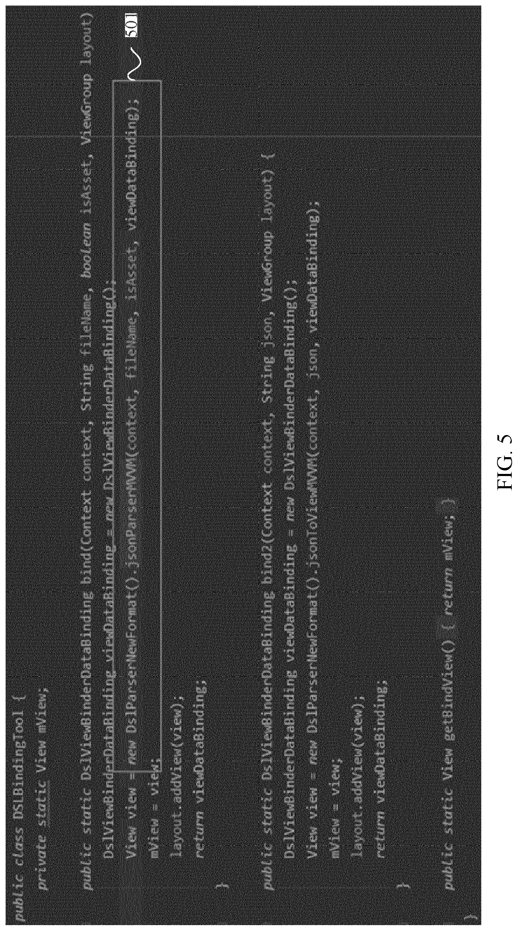

In this application, the parsing engine further needs to parse the binding relationship between the control and the viewmodel object. It may be noted that, because the interface description file may be generated in any interface description language in this application, simple syntax logic definition and adaptation need to be performed on the binding relationship between the control and the viewmodel object for parsing engines in different interface description languages, so that the parsing engine parses a binding relationship between a control and the viewmodel object declared in the interface description file. As shown in FIG. 5, DSLBindingTool is used in Java code to parse the binding relationship, in the interface description file, between the control and the viewmodel object. Code 501 marks a parsing format DslParserNewFormat defined in the parsing engine.

S504: Register the binding relationship between the control in the UI and the viewmodel object.

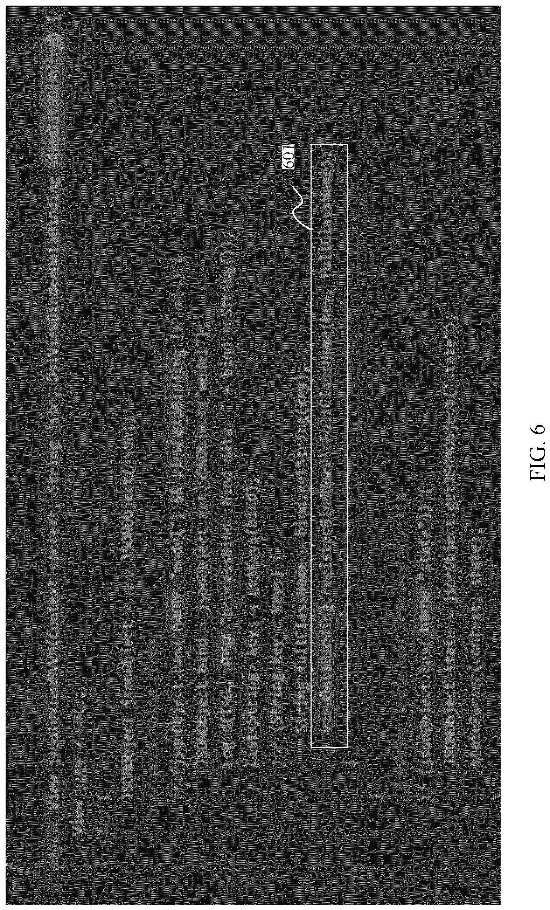

After the parsing engine identifies the binding relationship between the control in the UI and the viewmodel object, a registration module in the MWM module registers the identified binding relationship. For example, the registration module may set a reference of a view of the binding relationship, and set an attribute of the view as a binding attribute, to subsequently set listening for the identified binding relationship, that is, implement binding. As shown in FIG. 6, code 601 marks registration of the binding relationship between the identified control and the viewmodel object.

S505: Set a reference of the control in the UI, and set listening for the control.

In some embodiments, a binder module records a reference of the control having the binding relationship, and sets listening for the control. The following is an example of setting listening for a radio button (Radio Button):

```
          private void setRadioButtonsListener() {
                  radioGroup.setOnCheckedChangeListener
(new RadioGroup.OnCheckedChangeListener() {
                       @Override
                       public void onCheckedChanged(RadioGroup group,
int checkedId) { // modifying content
                       of the viewmodel object
                           if (checkedId == com.huawei.uikit.
baseinstruction.R.id.design_radio_btn) {
                                codeLayout.setVisibility(View.INVISIBLE);
                                designLayout.setVisibility(View.VISIBLE);
                           } else if (checkedId == com.huawei.uikit.
baseinstruction.R.id.code_radio_btn) {
                                codeLayout.setVisibility(View. VISIBLE);
                                designLayout.setVisibility(View.INVISIBLE);
                           } else {
                                return;
                           }
                       }
                  });
          }
```

It can be learned that the radio button (Radio Button) supports listening setOnClickListener to a click event. Therefore, the radio button (Radio Button) can be bound to an onClick event in the interface description file. Then a listening module starts to listen to whether the radio button (Radio Button) is clicked.

S506: The developer sets the instance of the viewmodel.

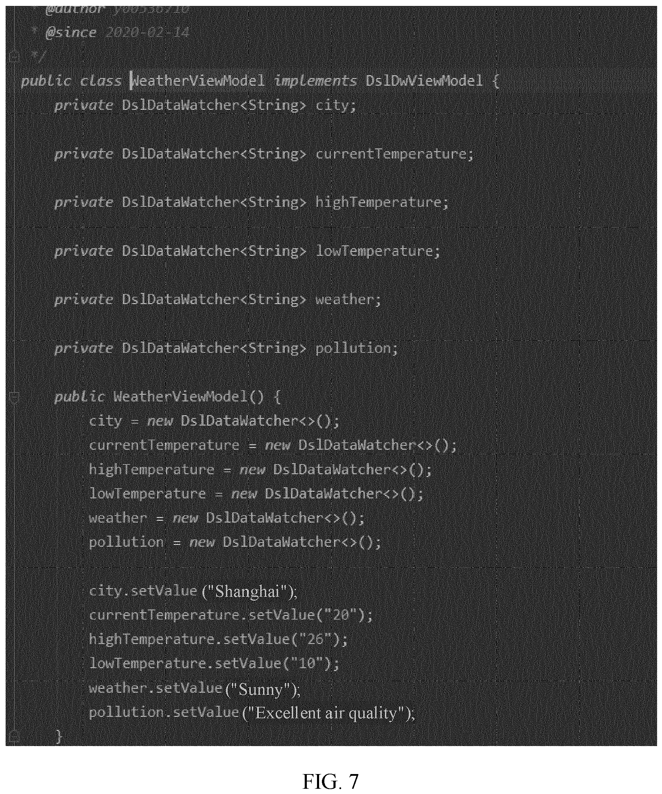

For example, the developer creates the instance of the customized viewmodel object in the Java code, that is, runs the instance of the viewmodel object in the viewmodel module. As shown in FIG. 7, a WeatherViewModel instance in the Java code is created, and a value is assigned to each member in the WeatherViewModel instance. For example, a value of "city" is "Shanghai", a value of "currentTemperature" is "20", and a value of "highTemperature" is "26".

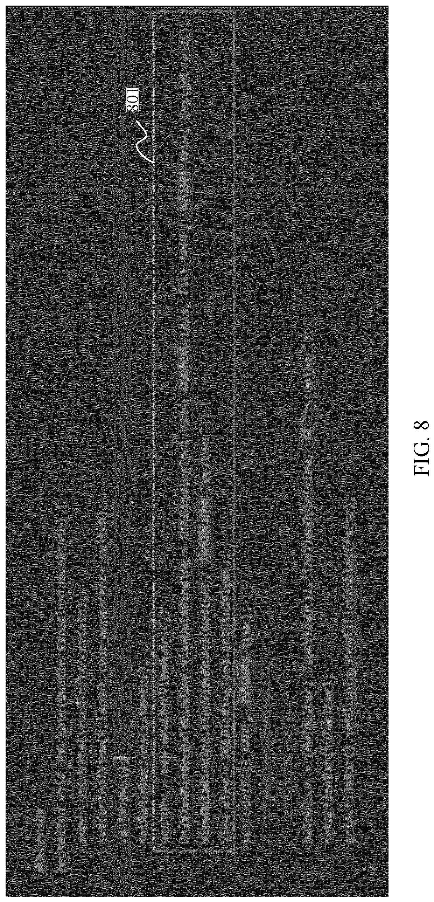

Then, the instance of the viewmodel object is bound to the control in the UI by using bindViewModel in the Java code. As shown in FIG. 8, code 801 implements binding between the instance of the viewmodel object and the control in the UI.

S507: Set a reference of the viewmodel object, and set listening for the ViewModel.

During the instantiation of the viewmodel object, the reference of the viewmodel object is generated. The binder module records the reference of the viewmodel object and sets listening for the viewmodel object. The following is an example of setting listening for the viewmodel object:

```
          private void setDslListener() {
                  File dir = getFilesDir();
                  File file = new File(dir, FILE_NAME);
                  Listening Method in dslListener = new FileObserver
(file, FileObserver.MODIFY) {//listening
                  method in an observer mode
                       @Override
                       public void onEvent(int event, @Nullable String path) {
                           Log.d("DSL_FILE", "onEvent: DSL file change");/
                           View view = new DslParserNewFormat().jsonParser(WeatherAcitivty.this,
                           FILE_NAME, false);
                           Log.d("DSL_FILE", "onEvent: DSL is to view");
                           runOnUiThread(new Runnable() { //refresh a UI
                                @Override
                                public void run() {
                                    designLayout.removeAllViews();
                                    Log.d("DSL_FILE", "onEvent: Remove Views");
                                    designLayout.addView(view);
                                    Log.d("DSL_FILE", "onEvent: Add View");
                                    setCode(FILE _NAME, false);
                                    Log.d("DSL_FILE", "onEvent: Set code");
                                }
                           });
                           setDslListener();
                       }
                  };
```

Therefore, listening is separately set for the control in the UI and the viewmodel object that has the binding relationship, and a binding channel between the control in the UI and the viewmodel object is established, to implement bidirectional binding between the control in the UI and the viewmodel object.

S508: Refresh the UI.

After bidirectional binding between the control in the UI and the viewmodel object is complete, the execution engine refreshes the UI.

S509: The developer changes data in the viewmodel.

S510: Listen to that the data in the viewmodel changes.

S511: Refresh the UI.

For example, in step S509 to step S511, when the developer modifies service logic in the application in the Java code and causes a change in the data in the viewmodel object, the listening module sends a listening event to the binder module. The binder module indicates, through the established bidirectional binding channel, the execution engine to refresh the UI, and correspondingly modifies content of the control bound to the viewmodel object.

S512: Listen to that the UI changes.

S513: Refresh the data in the corresponding viewmodel object.

For example, when the developer modifies content of some controls in the UI, the listening module sends a listening event to the binder module, and the binder module indicates, through the established bidirectional binding channel, the viewmodel module to modify the data in the viewmodel object bound to the controls.

In this way, the MWM architecture-based application is developed. It may be noted that the MWM architecture-based application development method provided in this embodiment of this application can support the developer in developing an application with the MWM architecture by using various interface description languages. In other words, regardless of what interface description language is used to develop the application, the developer may use the method provided in this embodiment of this application, to quickly and conveniently develop the MWM architecture-based application.

In addition, the MWM architecture-based development method provided in this embodiment of this application no longer depends on an Android APT precompilation mechanism of Google^{®}. However, in a process of parsing the interface description file, a binding relationship between the UI and background data is dynamically set, and an application scope is wide.

The following provides an example in which the developer develops the interface of the weather application by using the DSL language. The interface description file may be as follows:

```
          {
            "model": {
              "weather": "com.huawei.uikit.dsl.allnewdsl.viewmodel.WeatherViewModel"
            },//Customize the viewmodel object-weather
            "layout-data-common": {
              "Column(id:col1, background:@drawable/weather_sunny)": {
                "layout height": "match_parent",
                "WeatherToolbar(id:hwtoolbar)": { },
                "ScrollView(id:sv)": {
                   "Column(id:col2)": {
                     "WeatherHomeView(id:home)": {
                       "city": "$weather.city",//Declare a binding
relationship between each element in the control
                       and each member in the viewmodel.
                       "currentTemperature": "$weather.currentTemperature",
                       "highTemperature": "$weather.highTemperature",
                       "lowTemperature": "$weather.lowTemperature",
                       "weather": "$weather.weather",
                       "pollution": "$weather.pollution"
                       },
                     "WeatherLogoView(id:logo)": {
                       "updateTime": "$weather.time"
                       },
                     "WeatherHourlyView(id:hourly)": { },
                     "WeatherForecastView(id:forecast)": {}
                     }
                  }
               }
            },
            "layout-data-land": {
              "include": "weather_land.json" },
            "layout-data-tv": {
              "include": "weather_tv.json"
            }
         }
```

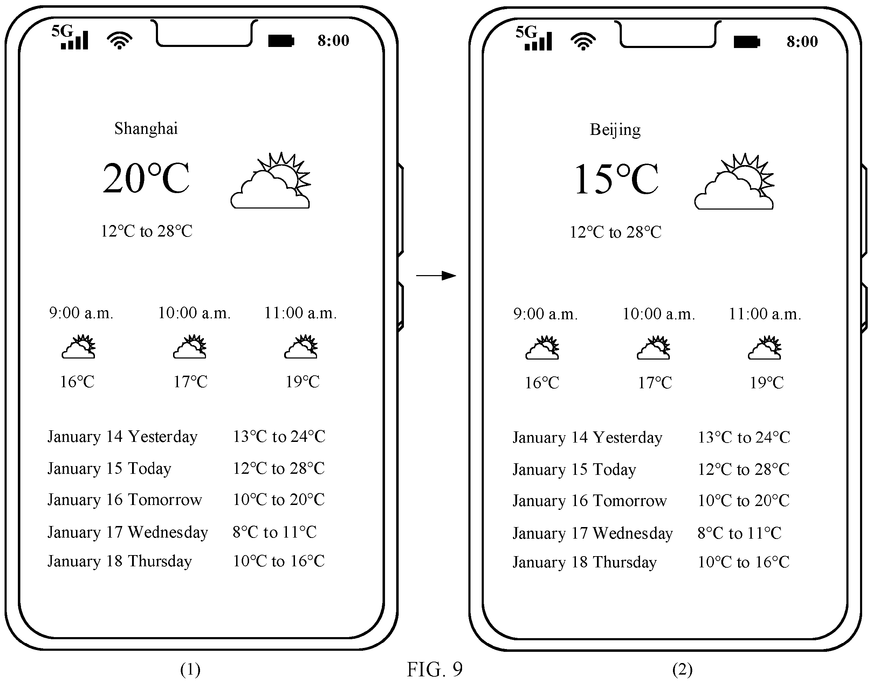

An interface shown in (1) in FIG. 9 may be drawn based on the foregoing interface description file. In this case, in the background data, a value of "$weather.city" is "Shanghai", and a value of "$weather.currentTemperature" is "20°C". If the developer performs the following modification, the value of "$weather.city" in the background data is changed to "Beijing", and the value of "$weather.currentTemperature" is changed to "15°C". The interface shown in (1) in FIG. 9 automatically changes to an interface shown in (2) in FIG. 9. It can be learned that the MWM architecture-based application can be developed by using the method provided in this embodiment of this application.

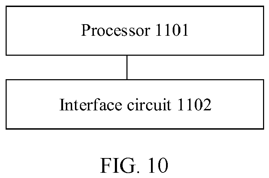

An embodiment of this application further provides a chip system. As shown in FIG. 10, the chip system includes at least one processor 1101 and at least one interface circuit 1102. The processor 1101 and the interface circuit 1102 may be interconnected through a line. For example, the interface circuit 1102 may be configured to receive a signal from another apparatus (for example, a memory of the development device 100). For another example, the interface circuit 1102 may be configured to send a signal to another apparatus (for example, the processor 1101). For example, the interface circuit 1102 may read instructions stored in the memory, and send the instructions to the processor 1101. When the instructions are executed by the processor 1101, the electronic device is enabled to perform steps performed by the development device 100 (for example, the mobile phone) in the foregoing embodiments. Certainly, the chip system may further include another discrete device. This is not specifically limited in this embodiment of this application.

An embodiment of this application further provides an apparatus. The apparatus is included in a development device, and the apparatus has a function of implementing behavior of the development device in any method in the foregoing embodiments. The function may be implemented by hardware, or may be implemented by hardware executing corresponding software. The hardware or the software includes at least one module or unit corresponding to the foregoing function, for example, a detection module or unit, a display module or unit, a determining module or unit, and a calculation module or unit.

An embodiment of this application further provides a computer storage medium, including computer instructions. When the computer instructions are run on a development device, the development device is enabled to perform any method in the foregoing embodiments.

An embodiment of this application further provides a computer program product. When the computer program product runs on a computer, the computer is enabled to perform any method in the foregoing embodiments.

It may be understood that to implement the foregoing functions, the terminal or the like includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In embodiments of this application, the terminal or the like may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

The foregoing descriptions about implementations allow a person skilled in the art to clearly understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An MWM architecture-based application development method, applied to an application development device, wherein the method comprises:
receiving a viewmodel object in background data that is in a first application and that is defined by a user, and a UI description file that is of the first application and that is defined by the user;
parsing the UI description file, and identifying a binding relationship, in the UI description file, between a first UI control and the viewmodel object;
setting listening for the first UI control, to update the viewmodel object;
setting an instance of the viewmodel object, and setting listening for the instance, to update the first UI control; and
updating a first UI of the first application when listening to that the first UI control changes or listening to that the instance changes.

2. The method according to claim 1, wherein the UI description file of the first application supports at least two interface description languages, and the at least two interface description languages comprise any two of an extensible markup language xml, a domain-specific language DSL, or an embedded domain-specific language EDSL.

3. The method according to claim 1 or 2, wherein the viewmodel object comprises one or more members, and the first UI control comprises one or more elements; and
the binding relationship between the first UI control and the viewmodel object comprises:
there is a correspondence between a first element in the first UI control and a first member in the viewmodel object.

4. The method according to claim 3, wherein the updating a first UI of the first application when listening to that the first UI control changes or listening to that the instance changes is specifically:
automatically updating content of the first element in the first UI when listening to that the user modifies content of the first member in the viewmodel object; or
automatically updating content of the first member in the viewmodel object when listening to that the user modifies content of the first element in the first UI.

5. The method according to claim 3 or 4, wherein the development device stores a registry, and the registry records a correspondence between an identifier of the first element of the first UI control and an identifier of the first member in the viewmodel object.

6. The method according to any one of claims 1 to 5, wherein the development device comprises a parsing engine, configured to parse the UI description file, and the parsing engine comprises a syntactic logic definition of the binding relationship between the first UI control and the viewmodel object.

7. An MWM architecture-based application development device, wherein the development device comprises a processor, a display screen, and a memory, the display screen and the memory are coupled to the processor, the memory is configured to store computer program code, the computer program code comprises computer instructions, and when the processor reads the computer instructions from the memory, the development device performs the following operations:
receiving a viewmodel object in background data that is in a first application and that is defined by a user, and a UI description file that is of the first application and that is defined by the user;
parsing the UI description file, and identifying a binding relationship, in the UI description file, between a first UI control and the viewmodel object;
setting listening for the first UI control, to update the viewmodel object;
setting an instance of the viewmodel object, and setting listening for the instance, to update the first UI control; and
updating a first UI of the first application when listening to that the first UI control changes or listening to that the instance changes.

8. The development device according to claim 7, wherein the UI description file of the first application supports at least two interface description languages, and the at least two interface description languages comprise any two of an extensible markup language xml, a domain-specific language DSL, or an embedded domain-specific language EDSL.

9. The development device according to claim 7 or 8, wherein the viewmodel object comprises one or more members, and the first UI control comprises one or more elements; and
the binding relationship between the first UI control and the viewmodel object comprises:
there is a correspondence between a first element in the first UI control and a first member in the viewmodel object.

10. The development device according to claim 9, wherein the updating a first UI of the first application when listening to that the first UI control changes or listening to that the instance changes is specifically:
automatically updating content of the first element in the first UI when listening to that the user modifies content of the first member in the viewmodel object; or
automatically updating content of the first member in the viewmodel object when listening to that the user modifies content of the first element in the first UI.

11. The development device according to claim 9 or 10, wherein the development device stores a registry, and the registry records a correspondence between an identifier of the first element of the first UI control and an identifier of the first member in the viewmodel object.

12. The development device according to any one of claims 7 to 11, wherein the development device comprises a parsing engine, configured to parse the UI description file, and the parsing engine comprises a syntactic logic definition of the binding relationship between the first UI control and the viewmodel object.

13. A computer-readable storage medium, comprising computer instructions, wherein when the computer instructions are run on a development device, the development device is enabled to perform the method according to any one of claims 1 to 6.

14. A computer program product, wherein when the computer program product runs on a computer, the computer is enabled to perform the method according to any one of claims 1 to 6.
